Europäisches Patentamt

European Patent Office

Office européen des brevets

(11) Veröffentlichungsnummer: **0 199 099**
**A2**

# (12) EUROPÄISCHE PATENTANMELDUNG

(21) Anmeldenummer: 86103816.4

(22) Anmeldetag: 20.03.86

(51) Int. Cl.⁴: **B65D 65/40 , B32B 27/00 ,
B32B 33/00**

(30) Priorität: 20.04.85 DE 3514383
24.05.85 DE 3518747

(43) Veröffentlichungstag der Anmeldung:
29.10.86 Patentblatt 86/44

(84) Benannte Vertragsstaaten:
AT BE CH DE FR GB IT LI LU NL SE

(71) Anmelder: Ewald Dörken GmbH & Co. KG
Wetterstrasse 58
D-5804 Herdecke(DE)

(72) Erfinder: Jablonka, Dieter, Dipl.-Ing.
Neue Strasse 11
D-5804 Herdecke(DE)
Erfinder: Urban, Klaus, Dipl.-Ing.
Beethovenweg 8
D-5804 Herdecke(DE)

(74) Vertreter: Köchling, Conrad, Dipl.-Ing. et al
Patentanwälte, Dipl.-Ing. Conrad Köchling
Dipl.-Ing. Conrad-Joachim Köchling Fleyer
Strasse 135
D-5800 Hagen 1(DE)

(54) **Kunststoffdichtungsbahn.**

(57) Um eine Kunststoffdichtungsbahn für Anlagen zur Lagerung von wassergefährdenden Stoffen, insbesondere für Mülldeponien, dahingehend zu verbessern, daß diese u.a. nicht nur zu großflächigen, homogenen Deponie-Dichtungen zusammengefügt werden kann, sondern daß auch eine größere Dichtigkeit mit als bisher dafür verwendeten Kunststoffdichtungsbahnen erreichbar ist, wird vorgeschlagen, eine Mehrschichtbahn vorzusehen, die aus zwei zueinander gleichen, oberseitig bzw. unterseitig der Mehrschichtbahn angeordneten homogenen Bahnen (1,2) aus Kunststoff besteht, der gut verschweißbar ist, eine hohe Witterungs-und Alterungsbeständigkeit sowie eine hohe UV-Strahlen-Beständigkeit, eine hohe Zugfestigkeit und Dehnbarkeit sowie eine hohe chemische Beständigkeit aufweist, und aus mindestens einer zwischen den vorgenannten Bahnen (1 und 2) deckungsgleich angeordneten Bahn (3,7,8) aus Kunststoff besteht, die gegenüber den äußeren Bahnen (1,2) eine höhere Dampfdichtigkeit gegen Aromaten und auch gegen Kohlenwasserstoffe und mindestens annähernd gleiche mechanische Eigenschaften wie der Kunststoff der beiden äußeren Bahnen (1 und 2) hat.

*Fig.1*

## Kunststoffdichtungsbahn

Die Erfindung betrifft eine ca. 2 mm dicke Kunststoffdichtungsbahn für Anlagen zur Lagerung von wassergefährdenden Stoffen, insbesondere für Mülldeponien.

Um den Zutritt von Sickerwasser aus Deponien in den Untergrund zu verhindern oder auf ein Mindestmaß zu beschränken, ist es bekannt, die muldenförmigen Deponien mit Dichtungen aus einer Vielzahl nebeneinander angeordneter und miteinander großflächig verschweißten Kunststoff dichtungsbahnen, zum Beispiel aus Polyvinylchlorid, Polyethylen, chloriertem Polyethylen, Ethylen-Propylen-Terpolymer oder aus Ethylen-Cop.-Bitumen auszukleiden.

Derartige Kunststoffdichtungsbahnen sind unter anderem zwar miteinander gut verschweißbar, auch ist deren mechanische Festigkeit nach menschlichen Ermessen ausreichend, um auch den Zugbeanspruchungen widerstehen zu können, die zum Beispiel bei Setzungsvorgängen der Deponiesohle auftreten können, aber dennoch besteht hierbei die Gefahr der Verunreinigung des Grundwassers durch Permeation Kohlenwasserstoffen, chlorierten Kohlenwasserstoffen oder deren Dämpfen.

Es gibt zwar Kunststoffe, die eine größere Dichtigkeit als die vorgenannten Kunststoffe haben, um auch Deponien gegen die zuvor genannten Stoffe oder deren Dämpfe abdichten zu können, aber diese sind unter anderem nicht so gut und dicht verschweißbar, daß daraus großflächige, homogene Deponie-Dichtungen gebildet werden können.

Aufgabe der Erfindung ist es nun, eine Kunststoffdichtungsbahn der im Oberbergriff des Anspruches 1 angegebenen Art derart zu verbessern, daß diese unter anderem nicht nur zu großflächigen homogenen Deponiedichtungen sicher zusammengefügt werden können, sondern daß auch eine größere Dichtigkeit als mit bisher verwendeten Kunststoffdichtungsbahnen erreichbar ist.

Die Lösung dieser Aufgabe ist im Anspruch 1 bezeichnet.

Vorteilhaft ist, eine mittlere Kunststoffschicht mit einer hohen Dampfdichtigkeit gegen Aromaten und auch gegen chlorierte Kohlen-Wasserstoffe vorzusehen.

Bevorzugt ist, wenn die Kunststoffschichten als Bahnen ausgebildet und miteinander stoffschlüssig, insbesondere durch Extrusion verbunden sind.

Durch diese Maßnahmen stehen sich beim Verschweißen von nebeneinander angeordneten Kunst stoffdichtungsbahnen, wobei sich deren Randteile jeweils überlappen, stets gut verschweißbare Kunststoffbahnen gegenüber, so daß einerseits eine sichere und auch dichte Verbindung nebeneinander angeordneter Kunststoffdichtungsbahnen erreichbar ist.

Andererseits werden durch die zwischen den äußeren Kunststoffbahnen angeordneten Kunststoffbahnen mit gegenüber den äußeren Kunststoffbahnen höherer Dampfdichtigkeit auch solche Stoffe und Gase zurückgehalten, die die äußeren Kunststoffbahnen evtl. durchdrungen haben sollten.

Dabei ist auch eine hohe mechanische Belastbarkeit der mehrschichtigen Kunststoffdichtungsbahn sichergestellt, die durch Einlagerung zum Beispiel einer Aluminiumfolie nicht erreichbar ist, weil Aluminiumfolien keine ausreichende Dehnung haben.

Bevorzugterweise sind die Kunststoffschichten als Bahnen ausgebildet und miteinander stoff - schlüssig, insbesondere durch Extrusion verbunden.

Weitere Möglichkeiten zur homogenen Verbindung der Kunststoffbahnen sind in den Ansprüchen 4 bis 6 offenbart.

Eine fertigungstechnisch besonders günstige, als auch günstig zu verarbeitende und gegen aggressive Medien resistente Ausführungsform ist dadurch gekennzeichnet, daß die äußeren Kunststoffbahnen aus Polyethylen, die mittlere Kunststoffbahn aus Polyester besteht.

Zur weiteren Verbesserung u.a. der Dichtigkeit ist es vorteilhaft, wenn die äußeren Bahnen jeweils aus mehreren, dünnen Folien zusammengefügt sind.

Unter Umständen bevorzugte Varianten sind in den Ansprüchen 9 bis 11 offenbart.

Unter Umständen ist est besonders vorteilhaft, wenn die Zwischenbahn aus Polyvinylalkohol - (PVA) besteht.

Zudem sollte die obere, äußere Bahn weiß und die untere, äußere Bahn schwarz sein, weil einerseits eine weiße Oberseite die Erkennbarkeit von Leckstellen verbessert und eine Aufheizung der Kunststoffdichtungsbahn durch Sonneneinstrahlung vermindert. Andererseits wird durch schwarze Färbung in an sich bekannter Weise die Alterungsbeständigkeit erhöht.

Eine vorteilhafte Weiterbildung des vorbeschriebenen Gegenstandes besteht noch darin, daß die der Verbesserung der Dampfdichtigkeit dienenden Kunststoffbahnen in die äußeren Kunststoffbahnen eingesiegelt sind, insbesondere derart, daß die Randteile der äußeren Kunststoffbahnen über den Rand der mittleren Kunststoffbahnen hinausreichen und miteinander verschweißt sind.

Hierdurch ist die eingelagerte Kunststoffbahn, die möglicherweise nicht so resistent gegen aggressive Medien wie die äußeren Kunststoffbahnen ist, nunmehr auch im Bereich der Ränder von den äußeren Kunststoffbahnen sicher abgedeckt.

Ausführungsbeispiele der Erfindung sind in der Zeichnung dargestellt und werden im folgenden näher beschrieben.

Es zeigen:

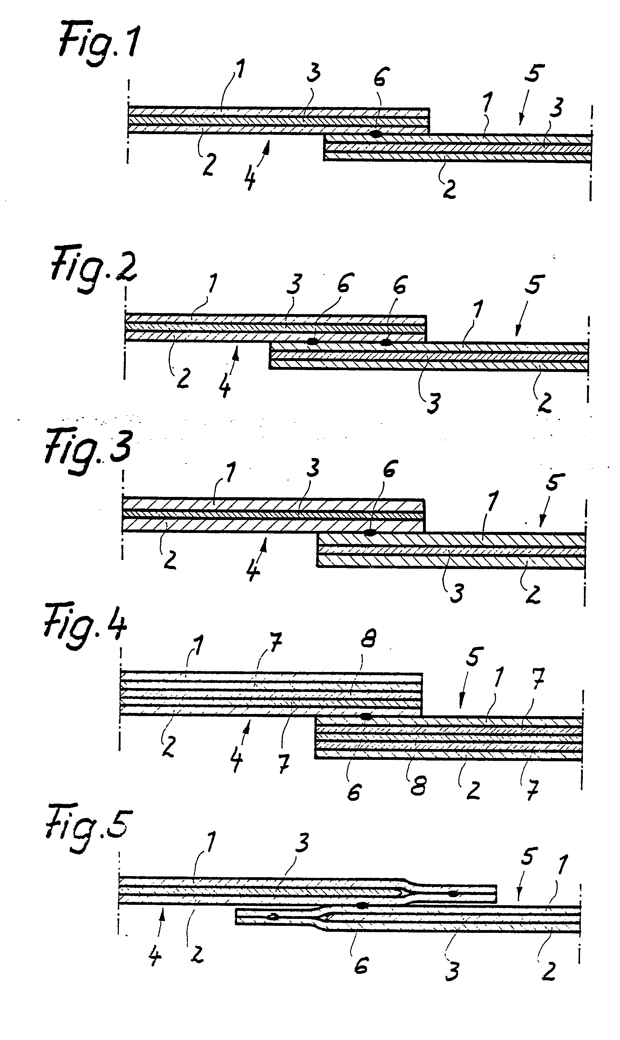

Fig. 1 bis 5 Teile zweier miteinander verschweißter, mehrschichtiger Kunststoffdichtungsbahnen jeweils im Schnitt.

Allen Ausführungsformen ist gemeinsam, daß jeweils zwischen zwei Kunststoffbahnen 1 und 2 aus Polyethylen mindestens eine Kunststoffbahn 3 aus Kunststoff mit einer gegenüber Polyethylen höheren Dampfdichtigkeit angeordnet ist. Alle Kunststoffbahnen 1 und 3 sind über ihre gesamte Fläche miteinander unlösbar verbunden. Zudem sind in allen Fällen die einander benachbarten, mehrschichtigen Kunststoffdichtungsbahnen 4 und 5 so angeordnet, daß sich deren Randteile einander überlappen. In den Bereichen der Überlappungen ist mindestens eine über die gesamte Länge der miteinander verbundenen Kunststoffdichtungsbahnen 4 und 5 sich erstreckende Schweißnaht 6 angeordnet.

Wie aus der Fig. 2 ersichtlich, können in an sich bekannter Weise auch zwei mit Abstand nebeneinander angeordnete Schweißnähte 6 vorgesehen werden, um zwischen den beiden Schweißnähten einen mit Druckluft beaufschlagbaren Kanal zur Prüfung der Schweißnähte auf Dichtigkeit zu bilden.

In Fig. 1 besteht die mittlere Kunststoffbahn 3 aus Polyester.

Gemäß Fig. 2 ist zwischen den beiden äußeren Kunststoffbahnen 1 und 2 aus Polyethylen eine Kunststoffbahn 3 aus Polyamid angeordnet, welche außer einer höheren Dampfdichtigkeit als Polyethylen gegen Kohlen-Wasserstoffe auch eine höhere chemische Beständigkeit aufweist.

Figur 3 zeigt eine mehrschichtige Kunststoffdichtungsbahn, bei welcher zwischen zwei äußeren Kunststoffbahnen 1 und 2 aus Polyethylen eine Kunststoffbahn 3 aus Polyvinylfluorid eingelagert ist. Gemäß Figur 4 sind zwischen zwei äußeren Kunststoffbahnen 1 und 2 aus Polyethylen drei Kunststoffbahnen 7 und 8 angeordnet, und zwar zwei Kunststoffbahnen 7 jeweils aus Polyethylenterephthalat und eine Kunststoffbahn 8 aus Polyamid, wobei letztere zwischen den Kunststoffbahnen 7 angeordnet ist, die jeweils einer Kunststoffbahn 1 bzw. 2 aus Polyethylen benachbart sind.

Gemäß Figur 5 reichen jeweils die Randteile der beiden äußeren Kunststoffbahnen 1 und 2 aus Polyethylen über den Rand der dazwischen angeordneten Kunststoffbahn 3, zum Beispiel aus Polyester, hinaus und sind miteinander homogen verbunden, so daß die mittlere Kunststoffbahn 3 völlig eingesiegelt ist.

**Ansprüche**

1. Kunststoffdichtungsbahn für Anlagen zur Lagerung von wassergefährdenden Stoffen, insbesondere für Mülldeponien, gekennzeichnet durch eine Mehrschichtbahn, bestehend aus zwei zueinander gleichen, oberseitig bzw. unterseitig der Mehrschichtbahn angeordneten, homogenen Schichten aus Kunststoff, der gut verschweißbar ist, eine hohe Witterungs-und Alterungsbeständigkeit sowie eine hohe UV-Strahlen-Beständigkeit, eine hohe Dehnbarkeit, eine hohe Zugfestigkeit und eine hohe chemische Beständigkeit hat und aus mindestens einer zwischen den vorgenannten Schichten deckungsgleich angeordneten sowie mit letzteren unlösbar verbundenen Schicht aus Kunststoff mit einer gegenüber den äußeren Schichten höheren Dampfdichtigkeit und mit mindestens annähernd gleichen mechanischen Eigenschaften wie die der äußeren Kunststoffschichten.

2. Kunststoffdichtungsbahn nach Anspruch 1, gekennzeichnet durch eine mittlere Kunststoff schicht (3,7,8) mit einer hohen Dampfdichtigkeit gegen Aromaten und auch gegen chlorierte Kohlen-Wasserstoffe.

3. Kunststoffdichtungsbahn nach einem der Ansprüche 1 oder 2, dadurch gekennzeichnet, daß die Kunststoffschichten als Bahnen (1,2,3,7,8) ausgebildet und miteinander stoffschlüssig, insbesondere durch Extrusion verbunden sind.

4. Kunststoffdichtungsbahn nach einem der vorherigen Ansprüche, dadurch gekennzeichnet, daß die Haftung der einzelnen Lagen durch chemische Behandlung, insbesondere durch Ätzen oder durch Oxydieren verbessert wird.

5. Kunststoffdichtungsbahn nach einem der vorherigen Ansprüche, dadurch gekennzeichnet, daß die Kunststoffbahnen (1,2,3,7,8) miteinander mittels Haftvermittlern, insbesondere mittels Acrylharzen oder mittels Polyurethane verbunden sind.

6. Kunststoffdichtungsbahn nach einem der vorherigen Ansprüche, dadurch gekennzeichnet, daß eine bessere Haftung der einzelnen Lagen durch eine Corona-Vorbehandlung erreicht wird.

7. Kunststoffdichtungsbahn nach einem der vorherigen Ansprüche, dadurch gekennzeichnet, daß die äußeren Kunststoffbahnen (1,2) aus Polyethylen, die mittlere Kunststoffbahn (3) aus Polyester besteht.

8. Kunststoffdichtungsbahn nach einem der vorherigen Ansprüche, dadurch gekennzeichnet, daß die äußeren Bahnen jeweils aus mehreren, dünnen Folien zusammengefügt sind.

9. Kunststoffdichtungsbahn nach einem der vorherigen Ansprüche, dadurch gekennzeichnet, daß zwischen zwei äußeren Kunststoffbahnen (1,2) aus Polyethylen eine Kunststoffbahn (3) aus Polyamid angeordnet ist.

10. Kunststoffdichtungsbahn nach einem der vorherigen Ansprüche, dadurch gekennzeichnet, daß die mittlere Kunststoffbahn (3) aus fluorhaltigen Kunststoffen, insbesondere aus Polyvinylfluorid bzw. Polytetrafluorethylen besteht, die beidseitig mit je einer Kunststoffbahn (1,2) aus Polyethylen beschichtet ist.

11. Kunststoffdichtungsbahn nach einem der vorherigen Ansprüche, dadurch gekennzeichnet, daß zwischen den äußeren Kunststoffbahnen (1,2) aus Polyethylen Kunststoffbahnen (7,8) aus Polyethylenterephtalat und aus Polyamid angeordnet sind.

12. Kunststoffdichtungsbahn nach einem der vorherigen Ansprüche, dadurch gekennzeichnet, daß die Zwischenbahn aus Polyvinylalkohol besteht.

13. Kunststoffdichtungsbahn nach einem der vorherigen Ansprüche, dadurch gekennzeichnet, daß die obere, äußere Bahn weiß, die untere, äußere Bahn schwarz ist.

14. Kunststoffdichtungsbahn nach einem der vorherigen Ansprüche, dadurch gekennzeichnet, daß die der Verbesserung der Dampfdichtigkeit dienenden Kunststoffbahnen (3,7,8) in die äußeren Kunststoffbahnen (1,2) eingesiegelt sind, insbesondere derart, daß die Randteile der äußeren Kunststoffbahnen (1,2) über den Rand der mittleren Kunststoffbahnen (3,7,8) hinausreichen und miteinander verschweißt sind.

Fig.1

Fig.2

Fig.3

Fig.4

Fig.5